Europäisches Patentamt

European Patent Office

Office européen des brevets

(11) Numéro de publication: **0 250 294**
**B1**

(12) **FASCICULE DE BREVET EUROPEEN**

(45) Date de publication du fascicule du brevet:
**26.04.89**

(21) Numéro de dépôt: **87401296.6**

(22) Date de dépôt: **10.06.87**

(51) Int. Cl.⁴: **B60S 1/36**

(54) **Dispositif d'essuie-glace, à balayage non circulaire.**

(30) Priorité: **18.06.86 FR 8608784**

(43) Date de publication de la demande:
**23.12.87 Bulletin 87/52**

(45) Mention de la délivrance du brevet:
**26.04.89 Bulletin 89/17**

(84) Etats contractants désignés:
**DE ES GB IT**

(56) Documents cités:
**EP-A- 0 169 363**
**DE-C- 3 125 628**
**DE-C- 3 405 131**
**GB-A- 2 158 344**

(73) Titulaire: **EQUIPEMENTS AUTOMOBILES MARCHAL,
21-27 boulevard Gambetta, F-92130 Issy les
Moulineaux(FR)**

(72) Inventeur: **Eustache, Jean-Pierre, 5, rue Albert Camus,
F-92160 Antony(FR)**
Inventeur: **Raymond, Guy, 39, avenue Jean-Baptiste
Corot, F-77680 Roissy-en-Brie(FR)**

(74) Mandataire: **Michardière, Bernard et al, C/O CABINET
PEUSCET 68, rue d'Hauteville, F-75010 Paris(FR)**

## Description

L'invention est relative à un dispositif d'essuie-glace, à balayage non circulaire, du genre de ceux qui comprennent une tête d'entraînement destinée à être soumise à un mouvement de rotation alternatif, un bras d'essuie-glace monté sur la tête de manière, d'une part, à être entraîné dans le mouvement général de rotation alternatif de la tête, et, d'autre part, à pouvoir être déplacé en translation, par rapport à la tête, suivant la direction longitudinale de ce bras, des moyens de commande étant en outre prévus pour communiquer à la tête son mouvement de rotation alternatif, et au bras son mouvement de translation par rapport à la tête, les moyens de commande du bras comprenant une manivelle animée d'un mouvement de rotation autour du même axe de rotation que celui de la tête (Dispositif connu, par exemple, de DE-C 3 405 131).

On sait que le balayage non circulaire vise à établir une surface de balayage plus importante que celle obtenue par un balayage circulaire, notamment en augmentant cette surface de balayage dans la zone des coins éloignés de la surface à essuyer, en particulier d'un pare-brise de véhicule automobile. Les dispositifs d'essuie-glace du type visé par l'invention permettent d'obtenir un tel balayage non circulaire en combinant un mouvement de translation du bras, suivant sa direction longitudinale, avec le mouvement de rotation alternatif classique de ce bras.

La combinaison de ces deux mouvements pose des problèmes de réalisation, notamment au niveau de l'encombrement des divers mécanismes nécessaires, ainsi qu'au niveau de leur complexité et du nombre de pièces en mouvement.

L'invention a pour but, surtout, de fournir un dispositif d'essuie-glace à balayage non circulaire, du genre défini précédemment, qui réponde mieux que jusqu'à présent aux diverses exigences de la pratique et qui, en particulier, soit d'un encombrement réduit, tout en assurant une bonne précision de la commande des mouvements, et tout en restant d'une réalisation relativement simple.

Selon l'invention, un dispositif d'essuie-glace, à balayage non circulaire, du genre défini précédemment est caractérisé par le fait que la manivelle propre à déplacer en translation le bras d'essuie-glace est animée d'un mouvement de rotation alternatif d'une amplitude inférieure à 180° et que le contour de la tête d'entraînement, au niveau de la manivelle, a la forme d'un secteur sensiblement circulaire correspondant à un angle également inférieur à 180°.

De préférence, l'angle entre les rayons extrêmes du secteur de la tête d'entraînement est inférieur à 90°.

La manivelle peut être directement reliée à l'extrémité du bras d'essuie-glace par un joint de transmission du type à cardan, le bras d'essuie-glace étant monté avec une possibilité d'oscillation par rapport à un guide lié à la tête.

Une telle possibilité d'oscillation est avantageusement obtenue du fait que le bras d'essuie-glace est monté coulissant dans une rotule sphérique portée par l'extrémité du guide lié à la tête. Le bras peut avoir la forme d'une tige cylindrique propre à coulisser dans un alésage correspondant de la rotule sphérique.

Selon une autre possibilité, le bras est animé d'un mouvement de translation rectiligne par rapport à un guide lié à la tête et des moyens de liaison sont prévus entre l'extrémité de la manivelle et le bras. Ces moyens de liaison peuvent comprendre une bielle articulée à une extrémité sur la manivelle et, à l'autre extrémité, sur le bras.

La manivelle propre à commander les mouvements de translation du bras est calée en rotation sur un arbre entraîné suivant un premier mouvement de rotation alternatif, ledit arbre traversant librement en rotation un palier pour la tête d'entraînement, ainsi qu'un arbre creux, coaxial, destiné à être animé d'un autre mouvement de rotation alternatif, cet arbre creux étant lié en rotation à la tête d'entraînement, de manière à commander le mouvement de cette tête.

L'arbre creux peut comporter une extension radiale, en vue de la liaison en rotation avec la tête d'entraînement, cette liaison étant assurée par un système pion/logement, ou équivalent, prévu vers l'extrémité de l'extension éloignée de l'axe géométrique de l'arbre creux.

L'arbre de la manivelle assurant les déplacements alternatifs en translation du bras est commandé par des moyens sensibles à la position angulaire de la tête d'entraînement par rapport à un bâti, fixe relativement à la surface à essuyer.

Avantageusement, les moyens de commande de l'arbre de la manivelle comprennent un support entraîné dans le mouvement de rotation alternatif de la tête d'entraînement, ce support étant muni dans une zone éloignée radialement de l'axe géométrique de l'arbre de la manivelle, d'un organe rotatif, notamment un pignon, monté libre en rotation par rapport au support mais lié en translation à ce support, cet organe rotatif étant propre à rouler, sans glisser, contre la surface intérieure d'une piste, en arc de couronne circulaire, fixe par rapport au susdit bâti, une bielle de liaison, ou équivalent, étant prévue entre un point excentré de l'organe rotatif et une extension radiale liée en rotation à l'arbre de la manivelle.

Le support peut être formé par au moins un élément plat, ou équivalent, lié en rotation à l'arbre creux destiné à commander la tête d'entraînement, cet élément plat, dont le plan moyen est orthogonal audit arbre, s'étendant radialement et portant, à son extrémité éloignée de l'arbre, le susdit organe rotatif.

De préférence, le support est formé par deux éléments plats parallèles écartés l'un de l'autre suivant la direction de l'arbre creux, chaque élément plat portant, vers l'intérieur, un organe rotatif, avantageusement un pignon, tandis que la bielle de liaison est située entre les deux pignons, chaque pignon coopérant avec une couronne circulaire prévue à l'intérieur d'un boîtier fixé sur le bâti.

La bielle de liaison peut être articulée sur l'extension liée à l'arbre de la manivelle.

Selon une autre possibilité, la bielle de liaison est munie, à son extrémité voisine de ladite extension, d'une crémaillère propre à coopérer avec un pignon, calé sur l'arbre de la manivelle, la surface extérieure de ce pignon constituant l'extension.

L'invention consiste, mises à part les dispositions exposées ci-dessus, en un certain nombre d'autres dispositions dont il sera plus explicitement question ci-après à propos de modes de réalisation particuliers décrits avec référence aux dessins ci-annexés, mais qui ne sont nullement limitatifs.

La figure 1, de ces dessins, est un schéma partiel, en élévation, d'un pare-brise et d'un dispositif d'essuie-glace à balayage non circulaire.

La figure 2 est une vue de dessus, avec parties coupées, d'un dispositif d'essuie-glace conforme à l'invention.

La figure 3 est une vue en élévation, avec parties coupées, du dispositif de la figure 2.

La figure 4 est une vue en coupe suivant la ligne IV–IV figure 2.

La figure 5 est une vue, en coupe suivant V–V, figure 4, d'un détail.

La figure 6 est une vue de dessus, semblable à la figure 2, d'une variante de réalisation du dispositif.

La figure 7 est un schéma simplifié illustrant les positions relatives des éléments du dispositif, pour une longueur efficace de bras minimale dans une position extrême de balayage.

La figure 8 est un schéma, semblable à celui de la figure 7, pour une position intermédiaire correspondant à l'extension maximale du bras.

La figure 9 est un schéma semblable à celui de la figure 7, pour la position du bras au milieu du pare-brise.

La figure 10 est une vue en coupe, suivant la ligne X–X, figure 11 des moyens de commande des mouvements de rotation alternatifs.

La figure 11 est une vue de dessus, avec parties arrachées, des moyens de commande de la figure 10.

La figure 12 montre, semblablement à la figure 10, une variante de réalisation des moyens de commande.

La figure 13, enfin, est une vue de dessus partielle des moyens de la figure 12.

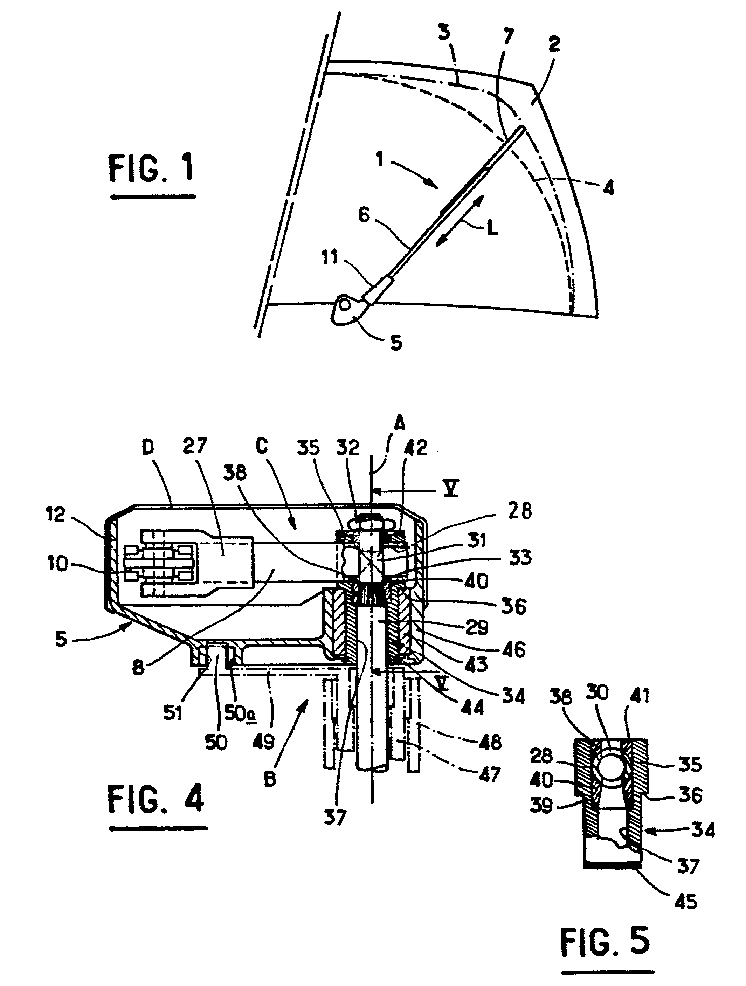

En se reportant à la figure 1 des dessins, on peut voir un dispositif d'essuie-glace 1 à balayage non circulaire pour un pare-brise 2 de véhicule automobile. Généralement, un tel dispositif d'essuie-glace est du type monobalai; il est cependant possible de prévoir un balayage non circulaire pour les dispositifs d'essuie-glace à plusieurs balais. Le contour extérieur de la surface balayée a été représenté par une ligne 3 en traits mixtes qui est située, dans la zone du coin éloigné supérieur du pare-brise représentée sur la figure 1, à l'extérieur d'un contour de balayage circulaire classique représenté par la ligne 4 en tirets, d'où une augmentation de la surface balayée.

Le dispositif 1 comprend une tête 5 d'entraînement destinée à être soumise à un mouvement de rotation alternatif, un bras 6 d'essuie-glace monté sur la tête 5 de manière, d'une part, à être entraîné dans le mouvement général de rotation alternatif de la tête 5, et, d'autre part, à pouvoir être déplacé en translation, par rapport à la tête 5, suivant la direction longitudinale (représentée par une double flèche L sur la figure 1) de ce bras. Le bras 6 porte, à son extrémité, d'une manière classique, un balai d'essuie-glace 7 muni d'une lame racleuse.

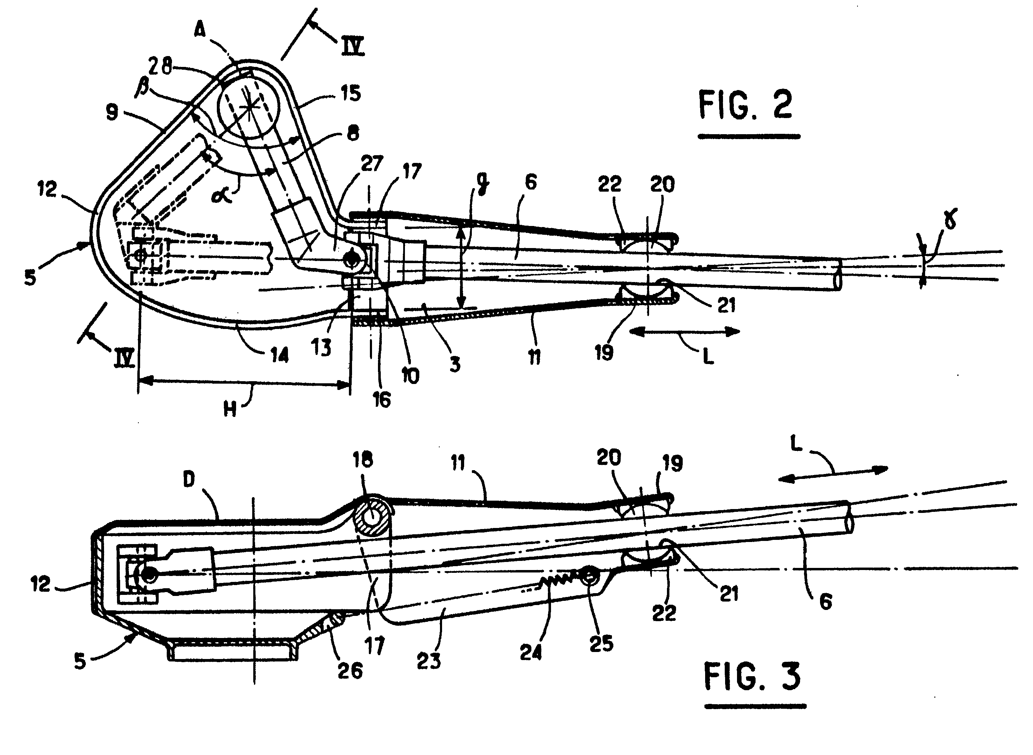

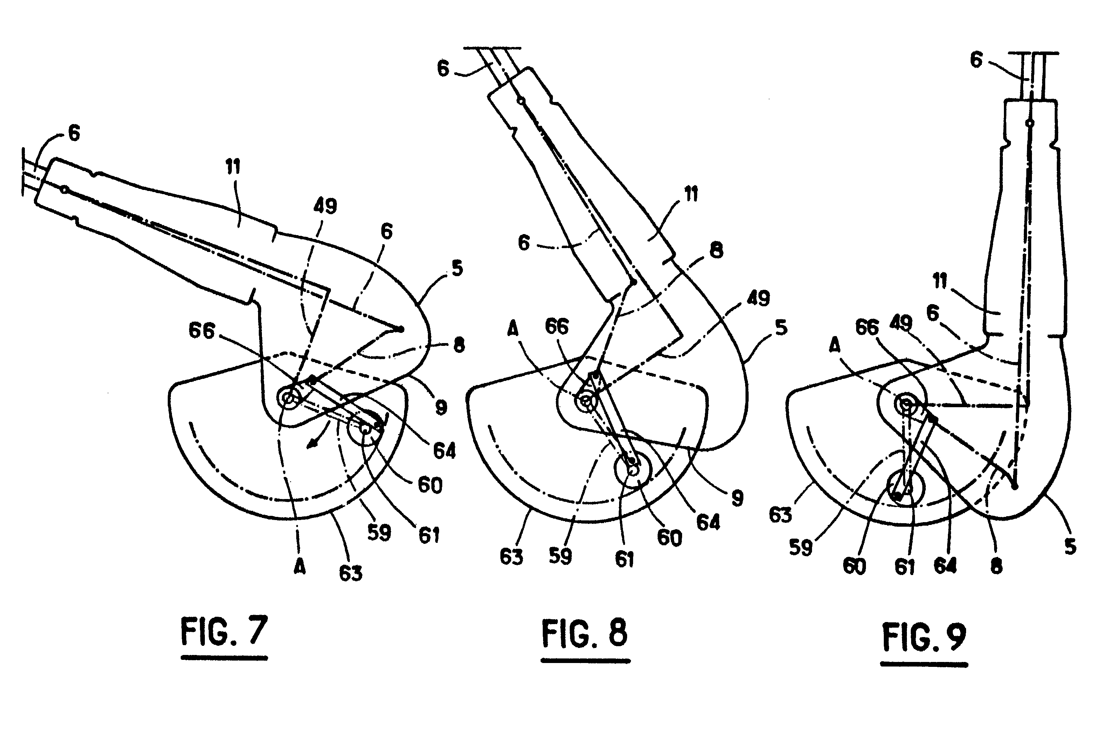

Des moyens de commande B (figure 4) sont prévus pour communiquer à la tête 5 son mouvement de rotation alternatif, tandis que des moyens de commande C (voir figures 2 à 4) sont prévus pour communiquer au bras 6 son mouvement de translation par rapport à la tête.

Les moyens de commande C du bras comprennent une manivelle 8 animée d'un mouvement de rotation autour du même axe géométrique de rotation A (figure 4) que celui de la tête 5.

Cette manivelle 8, propre à déplacer en translation le bras 6 d'essuie-glace (voir figures 2 et 3) est animée d'un mouvement de rotation alternatif d'une amplitude α (voir figure 2) inférieure à 180°, et le contour 9 (voir figure 2) de la tête d'entraînement 5, au niveau de la manivelle 8, a la forme d'un secteur sensiblement circulaire correspondant à un angle β également inférieur à 180°. En pratique, les angles α et β sont égaux ou sensiblement égaux.

De préférence, les angles α et β sont inférieurs à 90°. L'amplitude H (figure 2) du mouvement de translation alternatif correspond au débattement, suivant la direction L, de la partie d'extrémité de la manivelle 8, éloignée de l'axe géométrique A de rotation, liée au bras 6. Cette amplitude H peut être de l'ordre de 80 mm.

Selon la réalisation des figures 2 à 4, la manivelle 8 est directement liée à l'extrémité associée du bras 6 d'essuie-glace par un joint de transmission 10 du type à cardan, le bras d'essuie-glace 6 étant monté avec une possibilité d'oscillation par rapport à un guide 11 lié à la tête 5.

Plus précisement, la tête 5 peut être formée par une sorte de cuvette (voir figure 3) ouverte vers le haut, et limitée par une paroi latérale 12 formant rebord qui s'étend suivant le contour 9 de la tête. Un passage 13 (voir figure 2) est prévu dans la paroi 12 vers une des extrémités d'une partie 14 formée par une portion de cylindre, et d'une paroi plane 15, délimitant un bord rectiligne du secteur. Les extrémités de la partie 14 et de la paroi 15 sont conformées suivant des parties 16 et 17, parallèles, délimitant le passage 13. Ces parties 16 et 17 peuvent comporter une extension (voir figure 3) à leur extrémité éloignée du fond de la cuvette constituée par la tête. Les extensions de ces parties 16 et 17 servent de palier d'articulation à un axe 18 orthogonal à la direction moyenne du bras 6, axe sur lequel est articulé le guide 11. La largeur g du passage 13 est suffisante pour permettre les légers débattements transversaux de l'extrémité du bras 6 lié à l'extrémité de la manivelle 8. Le guide 11 est formé par une sorte d'enveloppe, sensiblement tronconique, dont le diamètre diminue progressivement quand on s'éloigne de la tête 5. L'extrémité 19 de ce guide 11 est cylindrique et porte une rotule sphérique 20, notamment en matière autolubrifiante. La rotule 20 comporte un alésage cylindrique 21 dans lequel coulisse à frottement doux le bras 6 formé par une tige cylindrique. Le siège 22 de la rotule est fixé dans l'extrémité 19 du guide 11. Le guide 11 est ouvert dans la zone 23 (figure 3) située du côté du bras 6 opposé à l'axe 18. Un ressort de traction 24 est tendu entre une broche 25 transversale portée par le guide 11 et un trou d'accrochage 26 prévu dans la tête 5. Le ressort 24 est destiné à appliquer le bras 6 et le balai 7 avec une pression suffisante contre la surface à essuyer. Un couvercle D est prévu pour fermer la tête 5.

L'extrémité de la manivelle 8 est munie d'une chape 27 dont les branches sont inclinées, par rapport à la direction moyenne de la manivelle 8, vers le passage 13.

L'autre extrémité 28 de la manivelle 8 est calée en rotation sur un arbre 29 (figure 4) entraîné suivant un premier mouvement de rotation alternatif. La manivelle 8 est généralement constituée par un élément tubulaire et l'extrémité 28 comporte un perçage 30 (figure 5), d'axe orthogonal à celui de la manivelle. Ce perçage 30 est destiné à être traversé par l'extrémité 31 (figure 4) de plus faible diamètre, de l'arbre 29. Ladite extrémité 31 comporte, en bout, un filetage permettant de visser un écrou 32 destiné au blocage de la manivelle 8 sur l'arbre 29. Un épaulement tronconique cannelé 33 constitue la transition entre la partie de plus fort diamètre de l'arbre 29 et l'extrémité 31 de plus petit diamètre. Un manchon 34 est enfilé autour de l'extrémité 31 et s'étend axialement au-delà de l'épaulement 33. Ce manchon 34 comporte une tête 35 (figure 5) de plus fort diamètre de telle sorte qu'un épaulement 36 est formé à la jonction de cette tête et du reste du manchon 34. Ce manchon 34 comporte un alésage intérieur 37 dont le diamètre est égal à celui de l'arbre 29, cet alésage débouchant dans un autre alésage 38 de plus fort diamètre, un épaulement interne 39 assurant la transition entre ces deux alésages. La tête 35 comporte un perçage, d'axe orthogonal à celui du manchon 34, destiné à être traversé par l'extrémité 28 de la manivelle 8. Une entretoise 40, munie d'un logement interne tronconique, comportant des cannelures conjuguées de celles de la partie 33 est prévue pour venir se loger dans l'alésage 38, entre la partie 28 de la manivelle et l'épaulement 39. Une autre entretoise 41 est prévue pour venir se loger, dans ledit alésage 38, contre la partie extrême 28 de la manivelle, du côté opposé à l'entretoise 40.

Le serrage de l'écrou 32 qui agit, par l'intermédiaire d'une rondelle 42 (figure 4) sur l'empilage des entretoises 40, 41 et de la partie d'extrémité 28, permet d'appliquer le logement tronconique de l'entretoise 40 sur la partie 33, et de bloquer en rotation la manivelle 8 par rapport à l'arbre 29.

Le manchon 34, par sa partie de plus petit diamètre que la tête 35, traverse librement en rotation un palier 43. L'arrêt axial du manchon 34 par rapport au palier 43 est assuré, d'une part, par l'épaulement 36 et, d'autre part, par un jonc élastique 44 (figure 4) ancré dans une gorge 45 prévue sur la surface extérieure de l'extrémité du manchon 34 éloignée de la tête 35. Du fait que le manchon 34 est lié en rotation à l'arbre 29, on peut dire que la liberté en rotation du manchon 34 par rapport au palier 43 signifie que l'arbre 29 traverse librement en rotation ce palier 43. La cuvette formant la tête d'entraînement 5 comporte un manchon 46 dans lequel est bloqué le palier 43, notamment par emmanchement à force. Ainsi, le guidage en rotation de la tête d'entraînement 5, autour de l'axe géométrique A est assuré par la coopération du palier 45 et du manchon 34. L'arbre 29, qui est maintenu par des moyens non représentés de manière à pouvoir tourner autour de son axe géométrique A, traverse librement en rotation un arbre creux 47 situé au-dessous de la tête 5, du côté opposé à la manivelle 8. Cet arbre 47 peut tourner dans un manchon 48 fixe solidaire du bâti. L'arbre creux 47 est destiné à être animé d'un mouvement de rotation alternatif différent de celui de l'arbre 29. Cet arbre creux 47 est lié en rotation à la tête d'entraînement 5 de manière à commander le mouvement de cette tête.

Cette liaison en rotation est assurée, dans l'exemple représenté, par une extension radiale 49 (figure 4) solidaire en rotation de l'extrémité de l'arbre creux 47, ladite extension comportant à son extrémité éloignée de l'axe A un pion 50, muni d'un galet rotatif 50a, propre à entrer dans un logement 51 prévu sur la paroi du fond de la tête 5, du côté opposé à la manivelle 8.

On comprend immédiatement qu'en communiquant à l'arbre 29 et à l'arbre creux 47 les mouvements de rotation alternatifs appropriés, on pourra obtenir:
– un mouvement de rotation d'ensemble, créé par l'arbre creux 47 qui entraîne la tête 5,
– un mouvement de translation alternatif du bras 6, suivant sa direction longitudinale L, résultant du mouvement alternatif de rotation de la manivelle 8 provoqué par l'arbre 29.

La solution des figures 2 à 4 ne fait intervenir qu'un minimum de pièces, pour un encombrement réduit de la tête 5. Le bras 6, en plus de son mouvement de translation, est animé d'un léger mouvement d'oscillation entre des positions extrêmes représentées par des traits mixtes formant un angle γ sur la figure 2, ce qui est rendu possible grâce à la rotule 20. La valeur de l'angle γ est réduite et cette oscillation n'est pas gênante.

Toutefois, si l'on souhaite que le bras 6 soit animé d'un mouvement de translation rectiligne, on peut prévoir, selon la variante de la figure 6, des moyens de liaison 52 entre l'extrémité de la manivelle 8 et le bras 6. Ces moyens de liaison 52 sont avantageusement formés par une bielle 53 articulée, à une extrémité, sur la manivelle 8, à l'aide d'un joint de transmission 54 du type à cardan, et, à son autre extrémité, sur le bras 6 par un autre joint de transmission 55 également du type à cardan. Le bras 6 est guidé en translation rectiligne par une douille cylindrique 56 maintenue par le guide 11.

L'arbre creux 47 est mis en mouvement de rotation alternatif par rapport au bâti fixe, auquel est lié le manchon 48, par tout système classique approprié, notamment un système à bielle-manivelle ou à quadrilatère déformable articulé, du genre croix de Tchebycheff tel que décrit, par exemple, dans la demande de brevet FR n° 85 00069 déposée le 4 janvier 1985 au nom de la Société demanderesse et publiée FR-A 2 575 714.

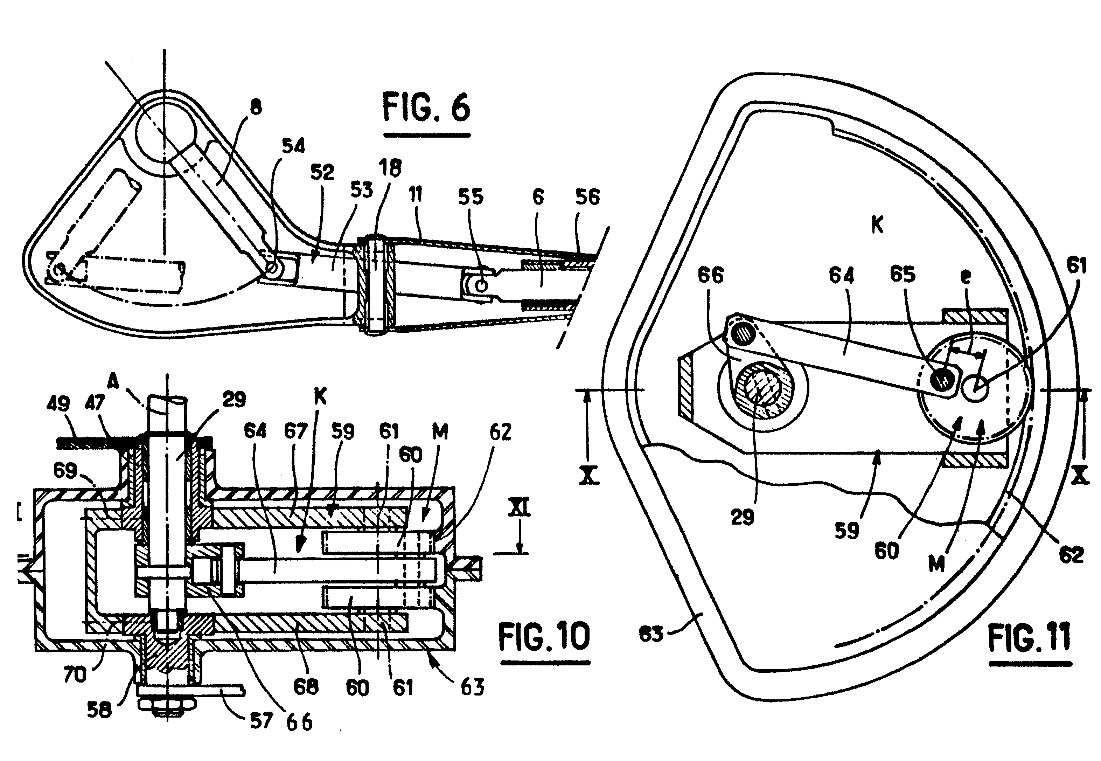

L'entrée de ce mouvement de rotation alternatif sur l'arbre creux 47 peut être assurée à l'aide d'une manivelle telle que 57 (figure 10) bloquée en rotation sur un prolongement 58, situé du côté opposé à l'extension 49, ce prolongement 58 étant lié en rotation à l'arbre creux 47.

L'arbre 29 de la manivelle est commandé par des moyens K sensibles à la position angulaire de la tête d'entraînement 5 par rapport au bâti fixe relativement à la surface à essuyer 2 (figure 1).

Les moyens K comprennent, comme visible sur les figures 10 et 11, un support 59 entraîné dans le mouvement de rotation alternatif de la tête 5. Ce support 59 est muni, dans une zone éloignée radialement de l'axe géométrique A de l'arbre 29, d'au moins un organe rotatif M, notamment un pignon 60 monté libre en rotation par rapport au support 59, mais lié en translation à ce support. Pratiquement, le pignon 60 est monté rotatif sur un axe 61 porté par le support 59.

L'organe rotatif M est propre à rouler, sans glisser, contre la surface intérieure d'une piste 62 en arc de couronne circulaire fixe par rapport au susdit bâti. Généralement, cette piste 62 est formée par un secteur circulaire comportant des dents propres à engrener avec celles du pignon 60. La piste 62 est avantageusement prévue sur la surface interne cylindrique d'un boîtier 63 (figure 10) ou équivalent fixé sur le bâti.

Une bielle de liaison 64 est prévue entre un point 65 excentré du pignon 60 et une extension radiale 66 qui est liée en rotation à l'arbre 29 de la manivelle.

Le point 65 peut être formé par un ergot porté par une face du pignon 60 et située à une distance radiale $e$ (figure 11) du centre du pignon 60. La liaison de l'autre extrémité de la bielle 64 et de l'extension 66 est également assurée par une articulation.

Le support 59, selon la réalisation des figures 10 et 11, est formé par deux éléments plats 67, 68, parallèles, dont le plan est orthogonal à l'axe de l'arbre 29. Les éléments plats 67, 68 sont écartés l'un de l'autre suivant la direction de l'arbre creux 47 et de l'axe géométrique A. Ces deux éléments 67, 68 sont rendus solidaires l'un de l'autre par tout moyen approprié, l'élément 67 étant traversé par l'arbre creux 47 auquel il est lié en rotation, notamment par une goupille 69, tandis que l'élément plat 68 est rendu solidaire du prolongement 58 par exemple également par une goupille 70. Chaque élément plat 67, 68 porte, vers l'intérieur, un pignon tel que 60 tandis que la bielle de liaison 64 est située entre les deux pignons. Chaque pignon 60 coopère avec une couronne circulaire correspondante 62 prévue à l'intérieur du boîtier 63. Ce boîtier peut être réalisé en deux parties pouvant être séparées l'une de l'autre.

Le fonctionnement du dispositif de balayage, conforme à l'invention, équipé des moyens de commande K va être décrit brièvement avec référence aux figures 7 à 9 qui représentent, schématiquement, les éléments ou pièces déjà décrits et désignés par les mêmes références numériques ou par les mêmes lettres sans que leur description soit reprise en détail.

La position de la tête 5 sur la figure 7 correspond à la position angulaire extrême du bras 6 dans le sens anti-horaire quand on regarde la figure 7 (ou la figure 1). L'extension 49, ainsi que la tête 5 occupent leur position angulaire extrême dans le sens anti-horaire.

La manivelle 8 occupe, par rapport à la tête 5, sa position angulaire extrême dans le sens horaire. Le bras 6 est retracté au maximum ce qui correspond à une longueur efficace du bras 6 minimale.

Le mouvement de balayage se poursuit, à partir de la position de la figure 7, par un mouvement de rotation de la tête 5 dans le sens horaire. Le support 59 lié en rotation à cette tête 5, se déplace également dans le sens horaire, entraînant l'axe 61 du pignon 60, lequel roule contre la piste 62 fixe par rapport au bâti. Le pignon 60 va donc tourner, autour de son axe 61, dans le sens anti-horaire de telle sorte que le point d'articulation 65 de la bielle 64, qui était éloignée au maximum de l'axe A dans la position de la figure 7, va se rapprocher de cet axe A.

Lorsque le pignon 60 aura tourné sensiblement de 180° autour de son axe 61, depuis la position de la figure 7, le point 65 se trouvera rapproché au maximum de l'axe A comme représenté sur la figure 8. La manivelle 8 occupera alors, par rapport à la tête 5, sa position angulaire extrême dans le sens anti-horaire. Cette position correspond à l'extension maximale du bras 6 et donc à la longueur efficace maximale de ce bras. Les rayons du pignon 60 et de la piste 62 sont choisis de telle sorte que cette extension se produise pour une position angulaire de la tête 5 correspondant à un angle éloigné supérieur du pare-brise 2 comme déjà expliqué précédemment.

La tête 5 poursuit son mouvement dans le sens horaire. Le pignon 60 continue à tourner dans le sens anti-horaire par rapport à son axe 61. Le point d'articulation 65 s'éloigne de l'axe A et entraîne l'extension 66 et la manivelle 8 vers la position de retrait maximale par rapport à la tête 5.

On retrouve, sur la figure 9, cette position de retrait maximal du bras 6 par rapport à la tête 5, semblable à celle de la figure 7, la tête 5 ayant toutefois tourné par rapport au bâti fixe.

La position de la figure 9 correspond à la position du bras 6 au milieu du pare-brise 2.

A partir de la figure 9, le mouvement de la tête 5 se poursuit dans le sens anti-horaire et, de nouveau, le point d'articulation 65 va se rapprocher de l'axe A provoquant le mouvement d'extension du bras 6. Cette extension redeviendra maximale pour une position angulaire du bras 6 correspondant à l'autre coin supérieur du pare-brise 2 (voir figure 1).

La tête 5 poursuivra son mouvement jusqu'à sa position angulaire extrême, vers la droite par rapport aux figures 7 à 9, correspondant à la position d'inversion du mouvement de la tête 5. Pour cette position extrême, la manivelle 8 et le bras 6 auront repris, par rapport à la tête 5, la position de retrait maximum correspondant à celle des figures 7 et 9, mais pour une position angulaire de la tête 5 différente par rapport au bâti. La tête 5 repart dans l'autre sens et ainsi de suite.

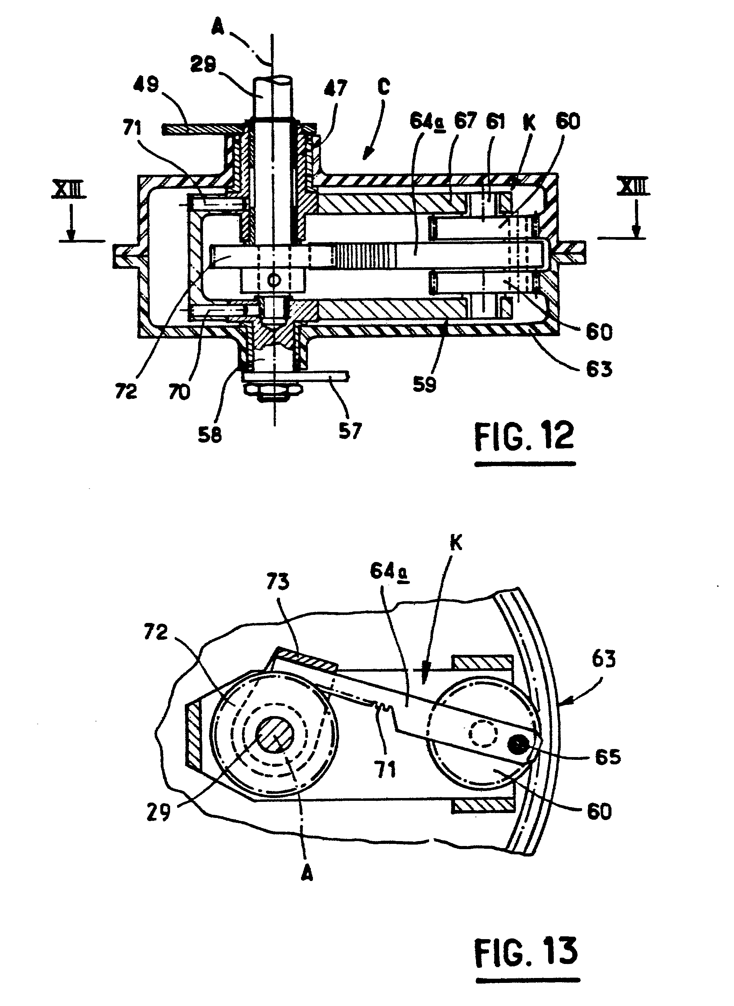

Les figures 12 et 13 illustrent une variante de réalisation des moyens K commandant l'arbre 29 de la manivelle. Les éléments de cette variante son désignés par les mêmes références numériques que sur les figures 10 et 11, éventuellement suivies par la lettre a. La description en détail de ces éléments ne sera pas reprise.

La différence essentielle entre la réalisation des figures 12 et 13, et celle des figures 10 et 11, réside dans le fait que la bielle de liaison 64a des figures 12 et 13 est munie, à son extrémité éloignée du point d'articulation 65 sur le pignon 60, d'une crémaillère 71, prévue du côté de la bielle 64a tournée vers l'axe géométrique A. L'extension 66 des figures 10 et 11 est remplacée par un pignon 72 calé sur l'axe 29, la denture périphérique externe de ce pignon coopérant avec la crémaillère 71; la surface extérieure de ce pignon constitue, en quelque sorte, un moyen équivalent à l'extension 66 et à son articulation. Une chape 73 montée rotative sur l'axe 29 est prévue pour maintenir la crémaillère 71 en engrènement avec le pignon 72.

Le fonctionnement des moyens de commande K des figures 12 et 13 est semblable à celui qui a été décrit précédemment avec référence aux figures 7 à 9.

Quel que soit le mode de réalisation adopté, le dispositif de balayage non circulaire conforme à l'invention est d'un encombrement réduit, notamment au niveau de la tête d'entraînement 5, et comporte un nombre minimum de pièces. Le fonctionnement de ce dispositif est fiable et sa construction relativement robuste et économique.

Un autre avantage de ce dispositif consiste dans le remplacement du porte-balai; il suffit de desserrer et d'enlever l'écrou de fixation 32 après avoir démonté un capot de protection pour retirer l'ensemble porte-balai et le remplacer par un ensemble neuf se centrant sur un pion à galet faisant partie du système de transmission de mouvement monté sur la carrosserie. Cet ensemble ne doit pas être remplacé souvent, car la pièce d'usure est le balai d'essuie-glace et celui-ci est monté de manière classique sur le porte-balai pour être remplacé facilement.

## Revendications

1. Dispositif d'essuie-glace, à balayage non circulaire, comprenant une tête d'entraînement (5) destinée à être soumise à un mouvement de rotation alternatif, un bras (6) d'essuie-glace monté sur la tête (5) de manière, d'une part, à être entraîné dans le mouvement général de rotation alternatif de la tête, et, d'autre part, à pouvoir être déplacé en translation, par rapport à la tête, suivant la direction longitudinale (L) de ce bras, des moyens de commande (B, C) étant en outre prévus pour communiquer à la tête (5) son mouvement de rotation alternatif, et au bras (6) son mouvement de translation par rapport à la tête (5), les moyens de commande (C) du bras comprenant une manivelle (8) animée d'un mouvement de rotation autour du même axe de rotation (A) que celui de la tête (5), caractérisé par le fait que la manivelle (8) propre à déplacer en translation le bras d'essuie-glace (6) est animée d'un mouvement de rotation alternatif d'une amplitude inférieure à 180° et que le contour (9) de la tête d'entraînement (5), au niveau de la manivelle, a la forme d'un secteur sensiblement circulaire correspondant à un angle (β) également inférieur à 180°.

2. Dispositif selon la revendication 1 caractérisé par le fait que l'angle (β) entre les rayons extrêmes du secteur de la tête d'entraînement (5) est inférieur à 90°.

3. Dispositif selon la revendication 1 ou 2 caractérisé par le fait que la manivelle (8) est directement reliée à l'extrémité du bras d'essuie-glace (6) par un joint de transmission (10), du type à cardan, le bras d'essuie-glace (6) étant monté avec une possibilité d'oscillation par rapport à un guide (11) lié à la tête.

4. Dispositif selon la revendication 3 caractérisé par le fait que le bras d'essuie-glace (6) est monté coulissant dans une rotule sphérique (20) portée par l'extrémité du guide (11) lié à la tête.

5. Dispositif selon la revendication 1 ou 2 caractérisé par le fait que le bras (6) est animé d'un mouvement de translation rectiligne par rapport à un guide (11) lié à la tête et que des moyens de liaison (52) sont prévus entre l'extrémité de la manivelle (8) et le bras (6), les moyens de liaison pouvant comprendre une bielle (53) articulée à une extrémité sur la manivelle et, à l'autre extrémité sur le bras (6).

6. Dispositif selon l'une quelconque des revendications précédentes caractérisé par le fait que la manivelle (8) propre à commander le mouvement de translation du bras (6) est calée en rotation sur un arbre (29) entraîné suivant un premier mouvement de rotation alternatif, ledit arbre (29) traversant librement en rotation un palier (43) pour la tête d'entraînement (5), ainsi qu'un arbre creux (47), coaxial, destiné à être animé d'un autre mouvement de rotation alternatif, cet arbre creux (47) étant lié en rotation à la tête d'entraînement (5) de manière à commander le mouvement de cette tête.

7. Dispositif selon la revendication 6 caractérisé par le fait que l'arbre creux (47) comporte une extension radiale (49) en vue de la liaison en rotation avec la tête d'entraînement (5), cette liaison étant assurée par un système pion (50)/logement (51), ou équivalent, prévu à l'extrémité de l'extension (49) éloignée de l'axe géométrique (A) de l'arbre creux (47).

8. Dispositif selon l'une quelconque des revendications précédentes caractérisé par le fait que l'arbre (29) de la manivelle (8) assurant les déplacements alternatifs en translation du bras (6) est commandée par des moyens (K) sensibles à la position angulaire de la tête d'entraînement (5) par rapport à un bâti, fixe relativement à la surface à essuyer.

9. Dispositif selon la revendication 8 caractérisé par le fait que les moyens de commande (K) de l'arbre (29) de la manivelle (8) comprennent un support (59) entraîné dans le mouvement de rotation alternatif de la tête d'entraînement (5), ce support (59) étant muni dans une zone éloignée radialement de l'axe géométrique (A) de l'arbre de la manivelle, d'un organe rotatif (M), notamment un pignon (60), monté libre en rotation par rapport au support (59) mais lié en translation à ce support (59), cet organe rotatif (M) étant propre à rouler, sans glisser, contre la surface intérieure d'une piste (62), en arc de couronne circulaire, fixe par rapport au susdit bâti, une bielle de liaison (64, 64a) ou équivalent, étant prévue entre un point excentré (65) de l'organe rotatif et une extension radiale (66, 73) liée en rotation à l'arbre (29) de la manivelle.

10. Dispositif selon la revendication 9 caractérisé par le fait que le support (59) est formé par au moins un élément plat (67, 68), ou équivalent, lié en rotation à l'arbre creux (47) destiné à commander la tête d'entraînement (5), cet élément plat (67, 68), dont le plan moyen est orthogonal audit arbre (47) s'étendant radialement et portant, à son extrémité éloignée de l'arbre, le susdit organe rotatif (M, 60).

11. Dispositif selon la revendication 10 caractérisé par le fait que le support (59) est formé par deux éléments plats (67, 68) parallèles, écartés l'un de l'autre suivant la direction de l'arbre creux (47), chaque élément plat portant, vers l'intérieur, un organe rotatif, avantageusement un pignon (60), tandis que la bielle de liaison (64, 64a) est située entre les deux pignons (60), chaque pignon coopérant avec une couronne circulaire prévue à l'intérieur d'un boîtier (63) fixée sur le bâti.

**Patentansprüche**

1. Scheibenwischervorrichtung mit nichtkreisförmiger Abtastung, bestehend aus einem Antriebskopf (5), der einer hin- und hergehenden Drehbewegung ausgesetzt wird, einem Scheibenwischerarm (6), der an dem Kopf (5) in der Weise angebracht ist, daß er einerseits entsprechend der allgemeinen hin- und hergehenden Drehbewegung des Kopfes angetrieben wird und andererseits im Verhältnis zum Kopf entsprechend der Längsrichtung (L) dieses Arms verschoben werden kann, wobei weiterhin Betätigungselemente (B, C) vorgesehen sind, um den Kopf (5) in die entsprechende hin- und hergehende Drehbewegung zu versetzen, und um den Arm (6) im Verhältnis zum Kopf (5) in die entsprechende Translationsbewegung zu versetzen, während die Betätigungselemente (C) des Arms eine Kurbel (8) enthalten, die in Rotationsbewegung um die gleiche Drehachse (A) wie der Kopf (5) versetzt wird, dadurch gekennzeichnet, daß die Kurbel (8), die geeignet ist, den Scheibenwischerarm (6) in eine Translationsbewegung zu versetzen, durch eine hin- und hergehende Drehbewegung mit einer Amplitude unter 180° betätigt wird und daß die Kontur (9) des Antriebskopfes (5) in Höhe der Kurbel die Form eines im wesentlichen kreisförmigen Sektors hat, der einem Winkel (β) entspricht, welcher ebenfalls kleiner ist als 180°.

2. Vorrichtung gemäß Anspruch 1, dadurch gekennzeichnet, daß der Winkel (β) zwischen den Endhalbmessern des Sektors des Antriebskopfes (5) kleiner ist als 90°.

3. Vorrichtung gemäß Anspruch 1 oder 2, dadurch gekennzeichnet, daß die Kurbel (8) durch ein Kardangelenk (10) direkt mit dem Ende des Scheibenwischerarms (6) verbunden ist, während der Scheibenwischerarm (6) so angebracht ist, daß er die Möglichkeit hat, sich im Verhältnis zu einer mit dem Kopf verbundenen Führung (11) hin- und herzubewegen.

4. Vorrichtung gemäß Anspruch 3, dadurch gekennzeichnet, daß der Scheibenwischerarm (6) verschiebbar in einem Kugelgelenk (20) gelagert ist, der sich am Ende der mit dem Kopf verbundenen Führung (11) befindet.

5. Vorrichtung gemäß Anspruch 1 oder 2, dadurch gekennzeichnet, daß der Arm (6) im Verhältnis zu einer mit dem Kopf verbundenen Führung (11) in eine geradlinige Translationsbewegung versetzt wird, und daß zwischen dem Ende der Kurbel (8) und dem Arm (6) Verbindungselemente (52) vorgesehen sind, die eine Stange (53) einschließen können, die an einem Ende an der Kurbel und am anderen Ende am Arm (6) angelenkt ist.

6. Vorrichtung gemäß einem der vorangegangenen Ansprüche, dadurch gekennzeichnet, daß die zur Steuerung der Translationsbewegung des Arms (6) geeignete Kurbel (8) drehbar auf einer Welle (29) verkeilt ist, die entsprechend einer ersten hin- und hergehenden Rotationsbewegung angetrieben wird und wobei diese Welle (29) frei drehbar durch ein Lager (43) für den Antriebskopf (5) sowie eine koaxiale Hohlwelle (47) hindurchtritt, die dazu bestimmt ist, in eine weitere hin- und hergehende Drehbewegung versetzt zu werden, wobei diese Hohlwelle (47) drehbar so mit dem Antriebskopf (5) verbunden ist, daß dadurch die Bewegung dieses Kopfes gesteuert wird.

7. Vorrichtung gemäß Anspruch 6, dadurch gekennzeichnet, daß die Hohlwelle (47) eine radiale Verlängerung (49) aufweist, die die Drehverbindung mit dem Antriebskopf (5) herstellen soll, wobei diese Verbindung durch ein aus Stift (50) und Aufnahme (51) bestehendes oder ein gleichwertiges System gewährleistet ist, welches am Ende der Verlängerung (49) in einem Abstand zur geometrischen Achse (A) der Hohlwelle (47) vorgesehen ist.

8. Vorrichtung gemäß einem der vorangegangenen Ansprüche, dadurch gekennzeichnet, daß die Welle (29) der Kurbel (8), die die hin- und hergehende Translationsbewegung des Arms (6) gewährleistet, durch Elemente (K) betätigt wird, die gegenüber der Winkelposition des Antriebskopfes (5) im Verhältnis zu einem Rahmen, der relativ zur zu reinigenden Oberfläche befestigt ist, empfindlich sind.

9. Vorrichtung gemäß Anspruch 8, dadurch gekennzeichnet, daß die Betätigungselemente (K) der Welle (29) der Kurbel (8) eine Stütze (59) enthalten, die entsprechend der hin- und hergehenden Drehbewegung des Antriebskopfes (5) angetrieben wird, und wobei diese Stütze (59) in einem Bereich, der in einem radialen Abstand zur geometrischen Achse (A) der Welle der Kurbel liegt, mit einem Drehelement (M), insbesondere einem Ritzel (60), versehen ist, welches sich im Verhältnis zur Stütze (59) frei drehen kann, während es jedoch mit dieser Stütze (59) translatorisch verbunden ist, wobei dieses Drehelement (M) dazu geeignet ist, sich schlupffrei entlang der Innenfläche einer kreisbogenförmigen Laufbahn (62) zu bewegen, die im Verhältnis zum erwähnten Rahmen befestigt ist, während eine Verbindungsstange (64, 64a) oder ein gleichwertiges Element zwischen einem außermittigen Punkt (65) des Drehelements und einer radialen Verlängerung (66, 73) vorgesehen ist, die drehbar mit der Welle (29) der Kurbel verbunden ist.

10. Vorrichtung gemäß Anspruch 9, dadurch gekennzeichnet, daß die Stütze (59) aus wenigstens einem Flachelement (67, 68) oder einem gleichwertigen Element besteht, welches drehbar mit der Hohlwelle (47) zur Betätigung des Antriebskopfes (5) verbunden ist, wobei sich dieses Flachelement (67, 68), dessen Mittelebene orthogonal zur erwähnten Welle (47) verläuft, in radialer Richtung erstreckt und an seinem der Welle abgewandten Ende das vorerwähnte Drehelement (M, 60) trägt.

11. Vorrichtung gemäß Anspruch 10, dadurch gekennzeichnet, daß die Stütze (59) aus zwei parallel verlaufenden Flachelementen (67, 68) besteht, die in Richtung der Hohlwelle (47) einen Abstand zueinander aufweisen, wobei jedes Flachelement nach innen ein Drehelement, vorteilhafterweise ein Ritzel (60), aufweist, während die Verbindungsstange (64, 64a) zwischen den beiden Ritzeln (60) angeordnet ist, wobei jedes Ritzel mit einer Kreisringfläche zusammenwirkt, die im Innern eines am Rahmen befestigten Gehäuses (63) vorgesehen ist.

## Claims

1. A windscreen wiping device with a non-circular sweeping action comprising a driving head (5) adapted to be subjected to an alternating rotational movement, a windscreen wiper arm (6) mounted on the head (5) in such a way as to be, on the one hand, entrained in the generally alternating rotational movement of the head and, on the other hand, so that it can be displaced translationally, relative to the head, along the longitudinal direction (L) of the arm, control means (B, C) also being provided to communicate the alternating rotational movement to the head (5) and the translational movement, relative to the head (5), to the arm (6), the means (C) for controlling the arm comprising a crank (8) driven in a rotational movement about the same axis of rotation (A) as that of the head (5), characterized by the fact that the crank (8) adapted to move the windscreen wiper arm (6) translationally is driven in an alternating rotational movement having an amplitude less than 180° and in that the contour (9) of the driving head (5) at the level of the crank (8) has the shape of a substantially circular sector corresponding to an angle (β) also less than 180°.

2. A device according to Claim 1, characterized by the fact that the angle (β) between the extreme radii of the sector of the driving head (5) is less than 90°.

3. A device according to Claim 1 or 2, characterized by the fact that the crank (8) is directly connected to the end of the windscreen wiper arm (6) by a transmission link (10) of the cardan kind, the windscreen wiper arm (6) being mounted with the possibility of oscillating relative to a guide (11) connected to the head.

4. A device according to Claim 3, characterized by the fact that the windscreen wiper arm (6) is mounted slidingly in a ball and socket joint (20) carried by the end of the guide (11) connected to the head.

5. A device according to Claim 1 or 2, characterized by the fact that the arm (6) is driven in a rectilinear translational movement relative to a guide (11) connected to the head and by the fact that connecting means (52) are provided between the end of the crank (8) and the arm (6), and the connecting means may comprise a connecting rod (53) articulated at one end to the crank and at the other end to the arm (6).

6. A device according to any one of the preceding Claims, characterized by the fact that the crank (8) adapted to control the translational movement of the arm (6) is wedged in rotation on a shaft (29) carried in a first movement of alternating rotation, the said shaft (29) passing freely in rotation through a bearing (43) for the driving head (5), as well as through a coaxial hollow shaft (47) adapted to be driven in another movement of alternating rotation, this hollow shaft (47) being connected in rotation to the driving head (5) so as to control the movement of this head.

7. A device according to Claim 6, characterized by the fact that the hollow shaft (47) comprises a radial extension (49) in order to make the connection in rotation with the driving head (5), this connection being secured by a pinion (50)/housing (51) system, or its equivalent, provided at the end of the extension (49) further away from the geometrical axis (A) of the hollow shaft (47).

8. A device according to any one of the preceding Claims, characterized by the fact that the shaft (29) of the crank (8) providing the alternating translational movements of the arm (6) is controlled by means (K) responding to the angular position of the driving head (5) relative to a frame fixed relative to the surface to be wiped.

9. A device according to Claim 8, characterized by the fact that the control means (K) for the shaft (29) of the crank (8) comprise a support (59) entrained in the alternating rotational movement of the driving head (5), the support (59) being equipped, in a region radially distanced from the geometric axis (A) of the shaft of the crank, with a rotating element (M), more particularly a pinion (60) mounted to rotate freely relative to the support (59) but fixed in translation to this support (59), this rotating element (M) being adapted to roll, without sliding, against the inner surface of a track (62) in an arc of a circular collar fixed relative to the above mentioned frame, a connecting rod (64, 64a) or its equivalent being provided between an eccentric point (65) of the rotating element and a radial extension (66, 73) connected in rotation to the shaft (29) of the crank (8).

10. A device according to Claim 9, characterized by the fact that the support (59) is formed by at least one flat element (67, 68), or the equivalent, connected in rotation with the hollow shaft (47) adapted to control the driving head (5), this flat element (67, 68), the median plane of which is orthogonal to the said shaft (47), extending radially and carrying the said rotating element (M, 60) at its end further from the shaft.

11. A device according to Claim 10, characterized by the fact that the support (59) is formed by two parallel flat elements (67, 68), separated from one another in the direction of the hollow shaft (47), each flat element carrying a rotating element, preferably a pinion (60), on the inside, whilst the connecting rod (64, 64a) is situated between the two pinions (60), each pinion cooperating with a circular collar provided inside a casing (63) fixed on the frame.

FIG. 1

FIG. 4

FIG. 5

FIG. 2

FIG. 3

FIG. 7

FIG. 8

FIG. 9

EP 0 250 294 B1

FIG. 6

FIG. 11

FIG. 10

**FIG. 12**

**FIG. 13**